# DEMANDE DE BREVET EUROPEEN

(11) **EP 4 279 183 A1**
(43) Date de publication de la demande: **22.11.2023**
(21) Numéro de dépôt: 23171469.2
(22) Date de dépôt: 04.05.2023
(51) Int. Cl.: B02C 17/14, B01F 29/34, B01F 35/42, G01N 1/28

(54) **DISPOSITIF POUR BROYEUR D'ÉCHANTILLONS ET PROCÉDÉ ASSOCIÉ**

(30) Priorité: 18.05.2022 FR 2204704
(71) Demandeur: Bertin Technologies, 78180 Montigny-le-Bretonneux (FR)
(72) Inventeur: FONTANILLAS, Damien, 78560 Le Port Marly (FR); BESNARD, Jacques, 78610 Auffargis (FR)
(74) Mandataire: Hautier IP

(57) **Abrégé**

L'invention concerne un dispositif (1) pour broyeur (4) d'échantillons comprenant un premier support (10) apte à être monté sur le broyeur (4) et configuré pour être entrainé en rotation, et plus particulièrement en précession, autour d'un axe principal (A1), le premier support (10) comprenant au moins un module dit porte-tube (11) configuré pour recevoir un tube (2) fermé par un bouchon (21) et contenant un échantillon, le porte-tube (11) comprenant une emmanchure (110) destinée à recevoir le tube (2) par coulissement selon l'axe central (A2) de l'emmanchure (110), dont la paroi interne présente une forme conique. Cela permet de tirer parti de la conicité du tube (2) liée aux contraintes de fabrication, afin d'améliorer le maintien du tube par effet cône sur cône tout en facilitant l'insertion du tube.

## Description

### DOMAINE TECHNIQUE

La présente invention concerne le domaine des broyeurs d'échantillons, aussi désignés homogénéisateurs. Elle trouve pour application particulièrement avantageuse le domaine du broyage d'échantillons chimiques ou biologiques, de préférence de large volume, par exemple des volumes supérieurs à 30 mL.

### ETAT DE LA TECHNIQUE

Il existe plusieurs systèmes de broyage ou de façon équivalente d'homogénéisation d'échantillons chimiques ou biologiques. Ces systèmes sont couramment désignés broyeurs ou homogénéisateurs. Ces systèmes comprennent généralement un plateau configuré pour recevoir dans des porte-tubes, des tubes fermés contenant les échantillons à broyer.

Le plateau est entrainé en rotation, et plus particulièrement en précession, autour d'un axe central, l'axe décrivant un cône lors de ce mouvement, induisant un débattement des tubes selon une direction perpendiculaire à ce mouvement. Les échantillons sont ainsi soumis à un mouvement de précession.

Les tubes contiennent en outre généralement des billes qui, conjuguées au mouvement auquel sont soumis les tubes, permettent le broyage de l'échantillon.

Le document EP 2 166 335 A1 décrit un adaptateur pour dispositif de broyage configuré pour être déplacé selon un mouvement oscillant de haut en bas pour broyer un échantillon. L'adaptateur comprend un corps pourvu de logements verticaux destinés à recevoir un tube d'échantillons, maintenu dans le logement par des disques élastiques.

Le document WO 2016/042252 A1 décrit un exemple de dispositif pour broyeur dans lequel les tubes sont disposés sur un support comprenant des porte-tubes, selon une direction sensiblement parallèle à l'axe central de rotation du support. Il s'avère que cette disposition limite le volume des tubes pouvant être utilisés, et donc le volume des échantillons à broyer.

Le document US 2016/199800 A1 décrit une plaque support pour homogénéisateur. Les tubes sont chacun disposés dans un plan sensiblement horizontal et selon une direction tangentielle au mouvement de rotation de la plaque. Le centre de masse du tube est décalé vers l'avant (relativement au sens de rotation), afin de maintenir le tube dans le porte-tube lors de l'homogénéisation. Cette solution s'avère en pratique complexe à utiliser pour avoir un bon maintien des tubes sur le support.

Un objet de la présente invention est donc de proposer un dispositif pour broyeur améliorant, et notamment facilitant, le maintien des tubes par le support. Plus particulièrement, un objet de la présente invention peut être d'améliorer le positionnement de tubes lors du fonctionnement d'un dispositif de broyage.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un aspect on prévoit un dispositif pour broyeur d'échantillons comprenant un premier support apte à être monté sur le broyeur et configuré pour être entrainé en rotation, et plus particulièrement en précession, autour d'un axe principal, le premier support comprenant au moins un module dit porte-tube configuré pour recevoir un tube fermé par un bouchon et contenant un échantillon, le porte-tube comprenant une emmanchure :
- s'étendant selon un axe central dans un plan sensiblement perpendiculaire à l'axe principal du premier support,
- destinée à recevoir le tube par coulissement le long de l'axe central de l'emmanchure, et
- présentant une paroi interne configurée pour coopérer par contact avec une paroi externe du tube.

Avantageusement, la paroi interne de l'emmanchure présente une forme conique.

Les tubes utilisés pour contenir des échantillons sont généralement faiblement coniques, leur paroi externe formant typiquement un angle d'environ 1°. Cette forme conique est due aux contraintes de fabrication de ces tubes. La paroi interne de l'emmanchure présentant une forme conique, cela permet de tirer parti de cette conicité du tube afin d'améliorer le maintien du tube dans l'emmanchure tout en facilitant l'insertion du tube.

Lorsque la paroi externe du tube est en contact avec la paroi interne de l'emmanchure, le maintien du tube est renforcé par effet cône sur cône. En outre, un emmanchement cône sur cône permet de localiser l'effort nécessaire pour insérer et dégager le tube par rapport aux dispositifs classiques dans lesquels les tubes sont maintenus perpendiculairement à l'axe de rotation du support, et notamment les porte-tubes cylindriques, pour lesquels l'effort doit être soutenu tout le long du mouvement de coulissement.

En outre, cela permet un bon maintien du tube par effet cône sur cône tout en ayant une tolérance sur la variabilité de diamètre des tubes due aux tolérances de fabrication, en permettant d'insérer plus ou moins loin le tube dans l'emmanchure.

Le maintien des tubes sur le premier support est donc amélioré et la manipulation des tubes pour leur installation dans le porte tube est facilitée.

Selon un aspect séparable ou combinable, on prévoit un dispositif pour broyeur d'échantillons comprenant un premier support apte à être monté sur le broyeur et configuré pour être entrainé en rotation, et plus particulièrement en précession, autour d'un axe principal, le premier support comprenant au moins un module dit porte-tube configuré pour recevoir un tube fermé par un bouchon et contenant un échantillon, le porte-tube comprenant une emmanchure :
- s'étendant selon un axe central dans un plan sensiblement perpendiculaire à l'axe principal du premier support,
- destinée à recevoir le tube par coulissement le long de l'axe central de l'emmanchure, et
- présentant une paroi interne configurée pour coopérer par contact avec une paroi externe du tube.

Avantageusement, le porte-tube comprend un module de blocage comprenant une mâchoire, le module de blocage étant déformable élastiquement, de préférence en flexion, entre au moins une position déployée autorisant l'insertion du tube dans l'emmanchure et une position de repos dans laquelle la mâchoire est destinée à enserrer le bouchon du tube lorsque le tube est inséré dans l'emmanchure.

Le module de blocage assure ainsi le maintien en place du tube dans l'emmanchure lors de la manipulation du support ainsi que lors du broyage, en enserrant le bouchon du tube. Cela limite en outre le risque de desserrage du bouchon. La position de repos du module de blocage étant la position dans laquelle le module de blocage est apte à coopérer avec le tube pour enserrer son bouchon, la position par défaut du module de blocage est une position de maintien du tube. Un maintien par défaut du tube est ainsi obtenu, minimisant le risque de retrait du tube de l'emmanchure. De façon synergique avec une emmanchure conique déformable élastiquement, comme détaillé ultérieurement, la mâchoire permet de définir pour un tube donné une position d'emmanchement maximal du tube et ainsi d'éviter de forcer sur l'emmanchure déformable.

Un autre aspect concerne un broyeur comprenant le dispositif selon au moins l'un des précédents aspects.

Un autre aspect concerne un procédé d'utilisation du dispositif selon l'un des précédents aspects ou du broyeur selon le précédent aspect, comprenant l'insertion d'un tube fermé par un bouchon et contenant un échantillon dans l'emmanchure du porte-tube, par un mouvement de coulissement du tube dans l'emmanchure, selon l'axe central de l'emmanchure, jusqu'à au moins une mise en contact de la paroi externe du tube et de la paroi interne de l'emmanchure.

Selon un exemple, l'emmanchure du porte-tube est conique.

Selon un exemple combinable ou alternatif, lors du mouvement de coulissement du tube dans l'emmanchure, le module de blocage passe de la position déployée à la position de repos. Selon un exemple, le passage de la position déployée à la position de repos est induit automatiquement suite au passage du tube.

Le procédé présente les effets et avantages décrits relativement au dispositif.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

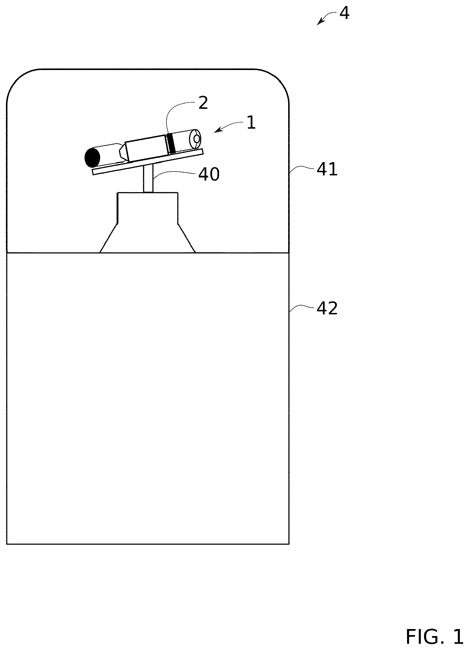

La figure 1 représente une vue schématique d'ensemble du broyeur selon un exemple de réalisation.
Les figures 2A à 2C représentent des vues en perspective et du dessus du dispositif selon trois exemples, le premier support étant seul ou avec les tubes insérés et/ou monté sur le deuxième support.
Les figures 3A et 3B représentent des vues du dessus respectivement du premier support et d'un tube, selon un exemple de réalisation.
Les figures 4A et 4B représentent respectivement une vue du dessus et une vue de côté du dispositif selon un exemple de réalisation, les tubes étant insérés dans les porte-tubes et le premier support étant monté sur le deuxième support.
La figure 5 représente une vue en coupe de l'emmanchure dans laquelle un tube est inséré, et du module de blocage selon un exemple de réalisation.
Les figures 6A à 6C représentent des vues de détail du module de blocage selon un exemple de réalisation, et sa coopération avec un tube et le deuxième support.
La figure 7 représente une vue en coupe du module de blocage selon un exemple de réalisation, dans lequel le porte-tube comprend un module de déblocage, selon un exemple de réalisation.
Les figures 8A et 8B représentent respectivement une vue en perspective du dessus et une vue de détail en coupe du dispositif selon un exemple de réalisation, dans lequel le porte-tube comprend un module de déblocage selon un autre exemple de réalisation.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, la paroi interne de l'emmanchure est configurée pour entourer le tube sur une partie seulement de sa circonférence, et est déformable élastiquement. Ainsi, l'emmanchure maintient par friction le tube en addition d'un effet cône sur cône. Lors de l'insertion du tube, l'emmanchure est déformée est plus particulièrement agrandie par le tube. Le fait que l'emmanchure n'entoure que partiellement le tube limite l'effort à déployer pour provoquer cette déformation élastique, ce qui facilite l'installation du tube.

Selon un exemple, l'emmanchure conique présente une fente s'étendant le long de l'emmanchure selon une direction parallèle à l'axe central. Selon un exemple, la fente s'étend sur toute la longueur de l'emmanchure. Le contenu du tube reste ainsi observable le long de la fente pour observer l'échantillon soit avoir à retirer le tube.

Selon un exemple, le dispositif comprenant au moins un tube, l'emmanchure conique présente, dans une section transversale prise perpendiculairement à l'axe central de l'emmanchure, un diamètre au repos inférieur au diamètre du tube pris dans la même section transversale lorsque le tube est inséré dans l'emmanchure. La tolérance sur la variabilité de diamètre des tubes due aux tolérances de fabrication est ainsi augmentée.

Selon un exemple, le dispositif comprenant au moins un tube, la paroi interne de l'emmanchure définit un premier angle, pris par rapport à une direction parallèle à l'axe central de l'emmanchure, inférieur ou égal à 5°, de préférence inférieur ou égal à 2°, de préférence sensiblement égal à 1°, et la paroi externe du tube définit un deuxième angle, pris par rapport à une direction parallèle à une direction d'extension principale du tube, égal au premier angle.

Le maintien par effet cône sur cône est amélioré pour des valeurs d'angle faible, ce qui est plus particulièrement le cas pour la conicité typique de ces tubes d'environ 1 °. Pour que l'effet cône sur cône fonctionne, il est préférable que les valeurs de conicité des surfaces en contact soient proches. Pour un meilleur maintien du cône, la conicité de l'emmanchure est sensiblement égale à celle du cône, indépendamment de l'éventuelle déformation élastique de l'emmanchure.

Selon un exemple, la paroi interne de l'emmanchure présente une forme conique sur sensiblement toute la longueur de l'emmanchure destinée à être au contact de la paroi externe du tube, longueur prise parallèlement à l'axe central de l'emmanchure. Suivant une autre possibilité, la longueur de la forme conique est d'au moins 50%, voire au moins 75% de la longueur de l'emmanchure ; dans ce cas, la partie conique forme de préférence la section distale de l'emmanchure au contact du tube, c'est à dire la section opposée à l'ouverture d'insertion du tube. En effet, il n'est pas nécessaire que la forme conique soit présente sur toute la longueur de l'emmanchure. L'effet cône sur cône est néanmoins amélioré plus la longueur des surfaces en contact est grande.

Selon un exemple, l'emmanchure présente une ouverture à chacune de ses extrémités, de part et d'autre de son axe central. De par sa forme conique, l'ouverture de surface la plus grande est située du côté par lequel le tube est destiné à s'insérer.

Selon un exemple, le porte-tube comprend un module de blocage comprenant une mâchoire, le module de blocage étant déformable élastiquement, de préférence en flexion, entre au moins une position déployée autorisant l'insertion du tube dans l'emmanchure et une position de repos dans laquelle la mâchoire est destinée à enserrer le bouchon du tube lorsque le tube est inséré dans l'emmanchure.

Selon un exemple, le module de blocage s'étend depuis l'emmanchure dans une direction parallèle à l'axe central de l'emmanchure. L'extension depuis l'emmanchure permet à l'utilisateur de passer entre les positions de passage et de blocage de façon simplifiée par rapport à un module de blocage situé à l'intérieur de l'emmanchure. Notamment, le module peut être déformable manuellement par un utilisateur, par exemple pour passer de la position de repos à la position déployée lorsque le tube est inséré dans l'emmanchure.

Selon un exemple, le dispositif comprend en outre au moins un tube monté sur chacun de l'au moins un porte-tube.

Selon un exemple, le tube présente une contenance supérieure ou égale à 30 mL, de préférence supérieure ou égale à 50 mL.

Selon un exemple, le support comprend au moins deux porte-tubes, de préférence au moins trois porte-tubes.

Selon un exemple, les porte-tubes sont répartis à intervalle angulaire régulier autour de l'axe central. Selon un exemple, dans lequel le dispositif comprend en outre un deuxième support comprenant au moins un module apte à recevoir un tube contenant un échantillon, le premier support étant apte à être monté de façon amovible sur le deuxième support. Le premier support est ainsi complémentaire à un deuxième support apte à recevoir des tubes. Le premier support peut être configuré pour être monté sur le broyeur par l'intermédiaire du deuxième support. Le premier support peut être adapté sur un broyeur comprenant déjà le premier support. Le dispositif peut ainsi être sous la forme d'un kit pour broyeur permettant différentes orientations et/ou volume de tubes. Le ou les modules du deuxième support peuvent être configurés pour recevoir des tubes de taille différente, par exemple de taille inférieure, aux tubes reçus par le premier support. En alternative, on peut prévoir que le premier support soit configuré pour être monté directement sur le broyeur, de façon amovible ou non, sans support intermédiaire.

Selon un exemple, dans lequel le premier support et le deuxième support comprennent chacun un organe d'indexage complémentaire configuré pour empêcher une rotation relative entre les premier et deuxième supports. L'efficacité du broyage est ainsi améliorée.

Selon un exemple, le premier support comprend en outre un module de déblocage configuré pour exercer une force sur au moins l'un parmi l'emmanchure et le tube inséré dans l'emmanchure, de façon à dépasser et/ou relâcher une force de maintien de la paroi interne de l'emmanchure sur le tube. Le module de déblocage facilite ainsi le retrait du tube de l'emmanchement cône sur cône, en permettant un déblocage du cône au début de son retrait. Le module de déblocage permet de s'affranchir d'un moyen de déblocage externe, par exemple d'un outil qu'un utilisateur utiliserait pour appliquer cette force sur l'emmanchure ou le tube, par exemple en venant taper à la base du tube pour le décoincer. La manipulation du dispositif est donc facilitée pour le retrait du tube.

Selon un exemple, le module de déblocage est configuré pour exercer une force sur le tube inséré dans l'emmanchure, de façon à induire un déplacement du tube selon une direction parallèle à l'axe central de l'emmanchure, dans un sens contraire au sens d'insertion du tube dans l'emmanchure. Selon un exemple, le module de déblocage est configuré pour exercer la force sur le bouchon du tube.

Selon un autre exemple, le module de déblocage est configuré pour exercer la force sur la base du tube.

Selon un exemple, le module de déblocage est configuré pour exercer une force sur l'emmanchure, de façon à déformer l'emmanchure en agrandissant une section transversale de l'emmanchure, prise perpendiculairement à son axe central.

Selon un exemple, l'axe central de l'emmanchure est perpendiculaire à une direction radiale du premier support.

Selon un exemple, le premier support présente une surface inférieure, l'axe central de l'emmanchure est perpendiculaire à une direction radiale du premier support, et l'axe central de l'emmanchure est disposé :
- en projection selon un plan perpendiculaire à l'axe principal du premier support, à une distance d du centre du premier support,
- en projection selon un plan perpendiculaire à l'axe central et incluant l'axe principal du premier support, à une hauteur h de la surface inférieure du premier support,
- le rapport d/h étant compris entre 5 et 7,5.

Ce rapport entre la distance au centre du support et la hauteur de l'emmanchure minimise les contraintes mécaniques qui s'exercent sur le porte-tube lors du broyage. Ceci est particulièrement avantageux lorsque le support est soumis à un débattement par précession selon un mouvement sensiblement sinusoïdal lors du broyage.

Selon un exemple, la paroi interne de l'emmanchure étant configurée pour entourer le tube sur une partie seulement de sa circonférence, et étant déformable élastiquement, le mouvement de coulissement du tube dans l'emmanchure est effectué de façon à induire, suite à la mise en contact de la paroi externe du tube et de la paroi interne de l'emmanchure, une déformation élastique de l'emmanchure.

Selon un exemple, le diamètre de l'emmanchure augmente suite à la mise en contact de la paroi externe du tube et de la paroi interne de l'emmanchure, lors du mouvement de coulissement du tube dans l'emmanchure.

Selon un exemple, lors du mouvement de coulissement du tube dans l'emmanchure, le module de blocage passe de la position déployée à la position de repos.

Selon un exemple, le passage de la position déployée à la position de repos est induit automatiquement suite au passage du tube.

Selon un exemple, le procédé comprend en outre le montage du dispositif sur le broyeur.

Selon un exemple, le dispositif comprenant en outre un deuxième support comprenant au moins un module apte à recevoir un tube contenant un échantillon, le premier support étant apte à être monté de façon amovible sur le deuxième support, le premier support et le deuxième support comprenant chacun un organe d'indexage complémentaire, le procédé comprend en outre le montage du premier support sur le deuxième support, ledit montage comprenant un assemblage des organes d'indexage des premier et deuxième supports de façon à bloquer une rotation relative entre les premier et deuxième support.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telles que par exemple l'expression « A agit sur B » qui peut signifier « A agit directement sur B » ou « A agit sur B par l'intermédiaire d'une ou plusieurs autres pièces ».

Dans la présente demande de brevet, le terme mobile correspond à un mouvement de rotation ou à un mouvement de translation ou encore à une combinaison de mouvements, par exemple la combinaison d'une rotation et d'une translation.

Le terme de « rotation » est ici entendu au sens large et inclut un mouvement de précession, qui est un mouvement de rotation au cours duquel l'axe de rotation est soumis à un changement graduel d'orientation. Notons qu'on peut prévoir que ce mouvement de rotation soit sans changement d'orientation de l'axe de rotation.

Dans la présente demande de brevet, lorsque l'on indique que deux pièces sont distinctes, cela signifie que ces pièces sont séparées. Elles peuvent être :
- positionnées à distances l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Dans la présente demande de brevet, le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction x, cela signifie que les pièces peuvent être mobiles l'une par rapport à l'autre, possiblement selon plusieurs degrés de liberté, à l'exclusion de la liberté en translation selon la direction x. Autrement dit, si on déplace une pièce selon la direction x, l'autre pièce effectue le même déplacement.

Dans la description détaillée qui suit, il pourra être fait usage de termes tels que « horizontal », « vertical », « longitudinal », « transversal », « supérieur », « inférieur », « haut », « bas », « avant », « arrière », « intérieur », « extérieur ». Ces termes doivent être interprétés de façon relative en relation avec la position normale d'utilisation du dispositif pour broyeur d'échantillon. Par exemple, la notion de « horizontal » correspond à un plan perpendiculaire à l'axe central de rotation du support. La notion de « vertical » correspond à une direction parallèle ou confondue à l'axe central de rotation du support.

On utilisera également un repère dont la direction longitudinale ou arrière/avant correspond à l'axe x, la direction transversale ou droite/gauche correspond à l'axe y et la direction verticale ou bas/haut correspond à l'axe z.

Le terme « broyeur » d'échantillons, ou de façon équivalente « homogénéisateur » désigne au sens large tout type de dispositif rotatif qui traite des échantillons, y compris non seulement les broyeurs de type secoueur à haute puissance comme décrit dans le présent document, mais également d'autres équipements de laboratoire tels que les centrifugeuses, les vortex, les secoueurs et les agitateurs.

Le dispositif 1 pour broyeur et le broyeur 4 sont maintenant décrits selon plusieurs exemples de réalisation en référence aux figures.

Comme illustré par la figure, le broyeur 4 comprend de façon tout à fait classique un dispositif conçu pour porter des tubes 2 contenant des échantillons à broyer. Le dispositif 1 est généralement entraîné en rotation, et plus particulièrement en précession, par un arbre 40 lui -même en rotation. Le dispositif 1 est monté sur le broyeur 4 via l'arbre 40 lui-même monté sur un bâti 42. Le dispositif 1 et les tubes 2 peuvent être disposés sous un capot 41 pivotant entre une position ouverte et une position fermée.

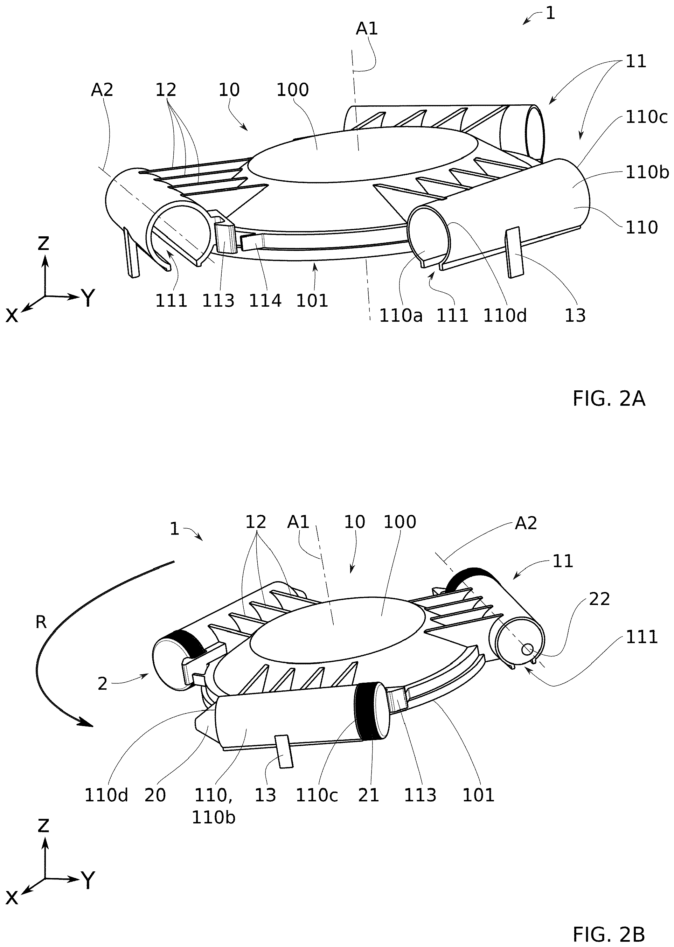

Le dispositif 1 selon l'invention est configuré pour le broyage d'échantillons contenus dans un tube 2 fermé. Pour cela, le dispositif 1 est apte à être monté sur le broyeur 4. Comme illustré par les figures 2A à 2B, le dispositif 1 comprend un premier support 10 apte à être monté directement ou indirectement sur le broyeur 4, aussi désigné support 10 dans la suite. Le support 10 comprend au moins un et de préférences plusieurs modules configurés pour recevoir chacun un tube 2. Ces modules sont désignés porte-tubes 11. Dans la suite, on considère à titre non-limitatif que le support 10 comprend une pluralité de porte-tubes 11 destinés à recevoir chacun un tube 2. Une fois montés dans les porte-tubes 11, les tubes 2 sont de préférence solidaires du support 10. Dans la suite, les caractéristiques décrites pour un porte-tube 11 peuvent s'appliquer à chacun des porte-tubes du support 10.

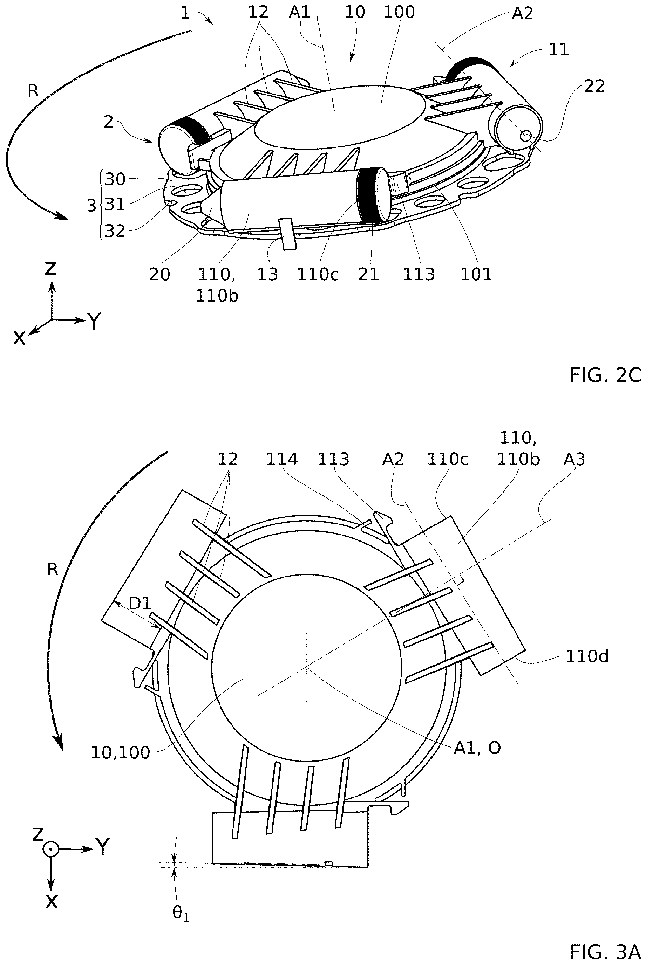

Le support 10 est configuré pour être entraîné en rotation, et plus particulièrement selon un mouvement de précession, autour d'un axe principal A1. Par exemple le support 10 peut être entraîné en précession selon le sens de précession R, comme l'illustrent les flèches représentées en figure 2B et 2C. Les tubes 2 contenant les échantillons à broyer sont ainsi entraînés en précession par le support 10. De préférence, les porte-tubes 11 sont répartis à intervalles angulaires réguliers autour de l'axe principal A1, afin de répartir le poids lors du mouvement de précession R du support 10.

Comme décrit en introduction, l'arbre 40 du broyeur 4 peut subir un changement d'orientation, par exemple décrire un cône, induisant un débattement du support 10 et des tubes 2 selon la direction z. Les échantillons sont ainsi soumis à un mouvement de précession.

Le support 10 peut être monté directement sur le broyeur 4 et notamment sur l'arbre 40. Le support 10 peut alors être fixé à demeure sur le broyeur 4 ou être monté de façon amovible sur le broyeur 4. En alternative, le support 10 peut être configuré pour être monté de façon amovible sur un deuxième support 3 lui-même configuré pour recevoir des tubes 2 pour leur broyage par un mouvement de précession autour de l'axe principal A1. Un tel support 3 est par exemple illustré en figure 2C, dans laquelle le support 10 est monté sur le deuxième support 3. Le support 10 peut donc être complémentaire d'un support existant 3, lui-même fixé à demeure sur le broyeur 4 ou apte à être monté de façon amovible sur le broyeur 4.

Le deuxième support 3 peut être formé d'une plaque 30 présentant des modules 31 configurés pour recevoir des tubes selon une direction parallèle à l'axe principal A1, par exemple des ouvertures 31. Le deuxième support 3 peut être configuré pour recevoir des tubes de contenance inférieure aux tubes 2 destinés à être réceptionnés par le premier support 10. Ainsi, chaque support 10, 3 permet l'utilisation d'un type de tubes de volume donné et le broyeur 4 est rendu plus modulaire et versatile. Selon un exemple, les tubes 2 destinés à être utilisés avec le premier support 10 présentent une contenance supérieure ou égale à 30 mL, de préférence supérieure ou égale à 50 mL. Les tubes destinés à être utilisé avec le deuxième support 3 peuvent présenter une contenance inférieure ou égale à 30 mL, par exemple inférieur ou égal à 15 mL. Les tubes destinés à être utilisé avec le deuxième support 3 peuvent présenter une contenance par exemple sensiblement égale à 7 mL, 2mL, ou encore 0,5 mL.

Le premier support 10 peut être monté sur le broyeur 4 par l'intermédiaire du deuxième support 3. Pour cela, le premier support 10 peut être monté sur le deuxième support 3 par tous moyens connus de l'homme du métier, par exemple par enclipsage ou par vissage. Selon l'exemple illustré par la figure 2C, le support 10 présente un corps 100 et une surface inférieure 101 de forme complémentaire à celle du support 3, par exemple une forme tronconique. Le support 10 et le deuxième support 3 peuvent être solidarisés par aspiration sous vide de façon à mettre en contact la surface inférieure 101 du support 10 et la surface supérieure du deuxième support 3.

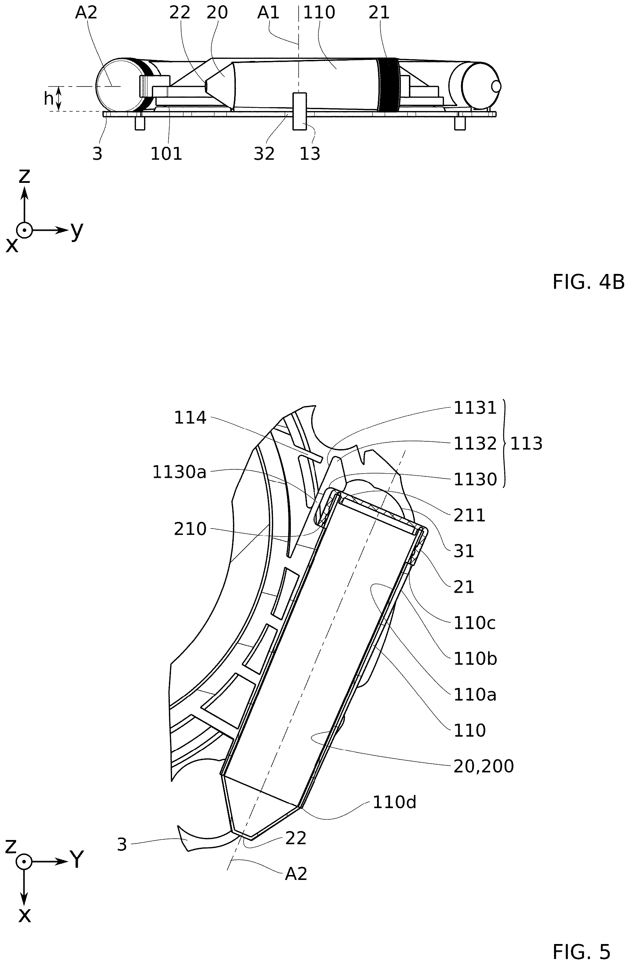

Pour éviter une rotation relative du support 10 et du deuxième support 3, ces supports peuvent chacun comprendre au moins un organe d'indexage 13,32 complémentaires l'un à l'autre. Ces organes 13,32 peuvent présenter une forme complémentaire empêchant cette rotation relative. Par exemple, comme illustré dans les figures 2C et 4B, le support 10, et plus particulièrement au moins un porte tube 11, peut comprendre une languette 13 configurée pour s'insérer dans une encoche 32 dans la plaque 30 du deuxième support 3 lorsque les supports sont assemblés. On peut prévoir que la languette 13 et l'encoche 32 soit inversées entre les supports. Un seul couple d'organe d'indexage est suffisant, pour empêcher cette rotation relative. On peut prévoir que plusieurs couples d'organes d'indexages soient disposés sur le support.

Pour des porte-tubes 11 de contenance importante, par exemple une contenance supérieure ou égale à 30 mL, de préférence supérieure ou égale à 50 mL, il peut être souhaitable de disposer les tubes 2 dans un plan parallèle au mouvement de précession du support 10. Comme illustré dans les figures 2A à 3A, les porte-tubes 11 peuvent être disposés chacun selon une direction tangentielle au mouvement de précession R, dans un plan sensiblement perpendiculaire à l'axe principal A1 du premier support 10. Les porte-tubes 11, et plus particulièrement leurs emmanchures 110, peuvent pour cela présenter un axe central A2 s'étendant selon cette direction tangentielle et être configurés pour recevoir les tubes 2 selon cet axe central A2. Comme illustré en figure 3A, l'axe central A2 des porte-tubes 11 peut-être perpendiculaire à une direction A3 s'étendant radialement depuis le centre O du support 10.

Se pose alors la question du maintien des tubes lors de la manipulation du dispositif 1, par exemple pour son montage dans le broyeur 4, et lors du broyage dans le broyeur 4. Pour maintenir les tubes 2 dans les porte-tubes 11, chaque porte-tube 11 comprend une emmanchure 110 s'étendant selon l'axe central A2 dans le plan sensiblement perpendiculaire à l'axe principal A1 du premier support 10. L'emmanchure 110 est configurée pour recevoir un tube 2 par coulissement selon l'axe central A2.

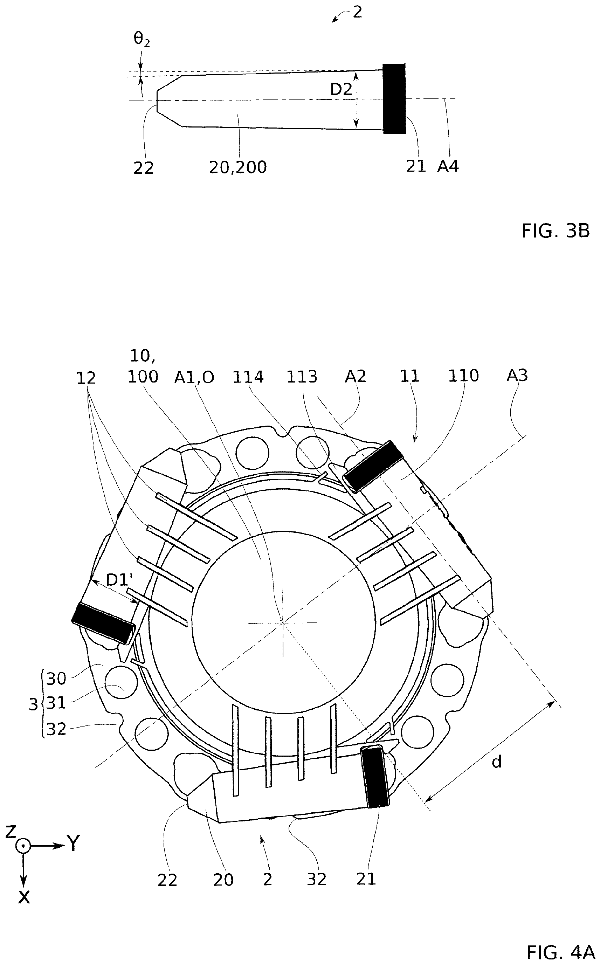

Comme l'illustre la figure 2A, l'emmanchure 110 présente une paroi interne 110a configurée pour coopérer par contact avec une paroi externe 200 du tube 2. Un tube 2 est par exemple illustré en figure 3B. Un tube 2 comprend un corps 20 présentant une surface externe 200. Le corps 20 est configuré pour contenir l'échantillon. Le corps 20 peut-être fermé une première extrémité 22 par une base, généralement tronconique. L'extrémité opposée à la base peut être ouverte et configurée pour être fermée par un bouchon 21. Le tube 2 s'étend selon une direction d'extension principale, par exemple l'axe A4 sur les figures.

Comme illustré par les figures 3A, 3B et 5, la paroi interne 110a de l'emmanchure 110 peut présenter une forme conique. Cette forme conique est de préférence complémentaire à la forme conique du tube 2. En effet, les tubes 2 sont généralement faiblement coniques à cause de contraintes de fabrication. Le dispositif 1 tire partie de cette conicité du tube 2 pour obtenir un emmanchement cône sur cône afin d'améliorer le maintien du tube 2 et de faciliter son insertion dans l'emmanchure 110. L'emmanchement cône sur cône est maintenant décrit plus en détail en référence aux figures 3A, 3B et 5. La paroi interne 110a défini un premier angle θ₁ par rapport à une direction parallèle à l'axe central A2. Pour simplifier les figures, dans la figure 3A cet angle θ₁ est représenté sur l'extérieur de la paroi externe 110b de l'emmanchure. L'angle θ₁ peut être inférieur ou égal à 2°, de préférence sensiblement égale à 1°. La figure 5 montre le contact entre la paroi externe de 200 du tube 2 et la paroi interne 110a de l'emmanchure 110.

Cet angle θ₁ est de préférence sensiblement égal à l'angle θ₂ de conicité du tube 2 défini entre sa paroi externe 200 et une direction parallèle à une direction d'extension principale A4 du tube. La conicité d'un tube 2 est typiquement de l'ordre de 1 °. Notons que les angles θ₁ et θ₂ peuvent ne pas être exactement égaux tout en permettant l'emmanchement cône sur cône, notamment dans le cas d'une emmanchure déformable élastiquement.

L'emmanchement cône sur cône est amélioré pour des valeurs d'angle conique faibles ainsi que pour une longue portée de l'emmanchement. On comprend donc que les valeurs d'angles ci-dessus favorisent le maintien du tube 2 dans l'emmanchure 110. L'emmanchure 110 présente en outre une forme conique coopérant avec le tube 2 sur toute sa surface de contact avec le tube 2. Afin de maximiser la surface de contact entre l'emmanchure 110 et le tube 2, cette surface de contact peut être maximisée. Pour cela, l'emmanchure 110 peut-être monobloc et former une surface de contact continue avec le tube 2 le long de sa paroi externe 200, à l'exception d'une éventuelle fente 111 décrite ultérieurement. Cette solution se distingue de porte-tubes comprenant une pluralité d'anneaux ou de clips distants les uns des autres et répartis le long du tube 2.

Selon son axe central A2, la longueur de l'emmanchure 110 est de préférence la plus grande possible jusqu'à correspondre la taille du tube. Selon un exemple, cette longueur de l'emmanchure 110 est comprise entre 60 % et 100% de la longueur du tube 2 prise selon l'axe A4. Cette gamme permet de limiter le risque de casse ou de déformation du tube 2 ainsi que de fuites au niveau du bouchon 21.

L'emmanchure 110 peut présenter à chacune de ses extrémités une ouverture 110c, 110d. Selon un exemple, de par la forme conique de l'emmanchure 110, l'ouverture 110d est de dimension inférieure à l'ouverture 110c par laquelle le tube 2 est introduit.

Selon exemple, l'emmanchure 110, et notamment sa paroi interne 110a, est déformable élastiquement. Ainsi, outre le maintien par emmanchement cône sur cône, l'emmanchure 110 maintient par friction le tube 2. Lors de l'insertion du tube 2, les dimensions de la section transversale de l'emmanchure 110, prise perpendiculairement à l'axe central A2, peuvent être agrandies par le tube 2. Cela améliore le maintien des tubes 2 ainsi que la tolérance de l'emmanchure 110 aux variabilités de fabrication des tubes 2.

Comme illustré dans les figures 3A, 3B et 4A, l'emmanchure 110, et plus particulièrement sa paroi interne 110a, peut présenter au repos c'est-à-dire sans tube 2, un diamètre D1 pour une section transversale donnée. Le tube 2 présente quant à lui un diamètre D2, pour une section transversale donnée. La paroi interne 110a et le tube 2 étant coniques on comprend que leur diamètre évolue le long respectivement de l'axe central A2 ou de la direction A4, selon la section transversale choisie. Lorsque le tube 2 est inséré dans l'emmanchure 110, la paroi interne 110a de l'emmanchure peut présenter un diamètre D1' pour une section transversale donnée. Du fait de la déformation élastique de l'emmanchure 110, le diamètre D1' peut être supérieur au diamètre D1 au repos. On comprend donc que le diamètre au repos D1 de la paroi interne 110a peut être inférieur au diamètre D2 du tube 2 pris dans la même section transversale lorsque le tube 2 est inséré dans l'emmanchure 110. Le diamètre au repos D1 de la paroi interne 110a peut être égal à D2 - x, x étant supérieur ou égal à 1,5 mm, de préférence sensiblement égal à 1,75 mm. L'emmanchure 110 peut présenter une épaisseur de paroi, prise sensiblement perpendiculairement à l'axe central A2, supérieure ou égale à 2 mm, par également sensiblement égale à 2,4 mm.

De préférence, l'emmanchure 110 entoure le tube 2 sur une partie seulement de sa circonférence. La déformation de l'emmanchure 110 est ainsi facilitée lors de l'installation du tube 2, notamment par rapport à une solution dans laquelle l'emmanchure déformable entourerait complètement la circonférence du tube 2. En outre, cela permet d'accommoder une éventuelle dilatation du tube 2 lors du broyage. Pour cela, et comme illustré par les figures 2A et 2B, le porte-tube 11 peut présenter une fente 111 s'étendant le long de l'emmanchure selon une direction parallèle à l'axe central A2. De préférence la fente 111 s'étend sur toute la longueur de l'emmanchure 110, d'une ouverture 110c à l'autre 110d. La fente 111 peut être disposées du même côté que la surface inférieure du support 10. Cette position permet d'optimiser la quantité de matière et l'encombrement associé au support 10, notamment par rapport à une fente disposée sur un bord latéral de l'emmanchure 110. En alternative, la fente 111 peut être disposée du côté de la surface supérieure du support 10.

Pour permettre cette déformation élastique de l'emmanchure 110, au moins l'emmanchure 110, et de préférence l'ensemble du porte-tube 11, peut être à base ou fait d'un matériau déformable élastiquement. Le matériau peut présenter un module d'élasticité en flexion sensiblement comprise entre 4000 MPa et 5000 MPa, par exemple sensiblement égal à 4500 MPa. Ce matériau peut être un polymère, par exemple de la famille des polyuréthanes ou de leurs dérivés. Le matériau peut par exemple être un polyuréthane de coulée sous vide tel que le SikaBiresin^{®} PX245 commercialisés par la société Sika^{®}.

À titre d'exemple, les propriétés mécaniques à 23°C du polymère PX245 sont décrites dans le tableau ci-dessous.

| Propriétés mécaniques du PX245 à 23°C | |
|---|---|
| Module d'élasticité en flexion (MPa) | 4500 |
| Contrainte maximale en flexion (MPa) | 150 |
| Contrainte maximale en traction (MPa) | 85 |
| Allongement à la rupture en traction (%) | 3 |
| Résistance à l'impact Charpy (kJ/m²) | 30 |
| Dureté Shore D | 85 |

Selon un exemple, il n'est pas recouru à un polymère du type élastomère. Avantageusement, la fente de l'emmanchure suffit à la capacité de déformation lors de la réception d'un tube dans son volume interne. Cette partie peut donc être en matériau relativement rigide et au coefficient de friction suffisamment faible pour ne pas gêner l'introduction du tube.

La disposition de l'emmanchure 110 par rapport au support 10 est maintenant décrite en référence aux figures 4A et 4B. Comme décrit précédemment, l'emmanchure 110 est disposée de façon tangentielle au mouvement de précession R. L'emmanchure 110 peut en outre être disposée par rapport au support 10 pour limiter les contraintes mécaniques s'exerçant sur le porte-tube 11 lors du mouvement de précession. La durabilité du dispositif 1 est ainsi améliorée à l'usage. Pour cela, l'emmanchure 110 peut être déportée par rapport au centre O du support 10 et à sa surface inférieure 101, de façon à limiter ces contraintes mécaniques.

Plus particulièrement, l'axe central A2 peut être disposé à une distance d du centre O du support selon la direction A3. Cette distance d est prise comme la plus petite distance séparant le centre O de l'axe central A2.

En projection selon un plan (y, z) perpendiculaire à l'axe central A2, ce plan incluant l'axe principal A1, l'axe central A2 peut être disposé à une hauteur h de la surface inférieure 101 du premier support 10 ou de façon équivalente à une hauteur h de la plaque 30 du deuxième support 3.

La distance d et la hauteur h peuvent être choisies de sorte que le rapport d/h est compris entre 5 et 7,5, de préférence entre 5,5 et 6,5, et plus préférentiellement encore sensiblement égal à 6,3. Ainsi la distance d au centre O du support 10 et la hauteur h de surplomb sont choisies ensemble pour minimiser les contraintes mécaniques s'exerçant sur le porte-tube 11 par rapport au débattement se produisant lors du broyage. Par exemple, la distance d peut être comprise entre 95 mm et 105 mm, par exemple sensiblement égale à 98 mm. La hauteur h peut être comprise entre 14 mm et 17 mm, par exemple sensiblement égal à 15,5 mm.

Afin de minimiser les contraintes mécaniques s'exerçant sur le porte-tube 11 lors du mouvement de précession R, le support 10 peut en outre comprendre des nervures 12 configurées pour renforcer la liaison mécanique entre l'emmanchure 110 et le support 10. Ces nervures 12 sont par exemple représentées en figures 2A à 2C, 3A et 4A. Les nervures 12 peuvent s'étendre entre la surface supérieure du corps 100 du support 10 et la paroi externe 110b de l'emmanchure 110. De préférence, plusieurs nervures 12 relient chaque emmanchure 110 au support 10, par exemple au moins trois nervures 12, et de préférence quatre nervures 12. Ces nervures 12 peuvent être réparties à intervalles réguliers le long de l'emmanchure 110.

Le support 10 peut en outre comprendre un module de blocage 113 configuré pour maintenir le tube 2 lorsque le tube est inséré dans l'emmanchure 110. Ce module de blocage 113 est décrit selon un exemple de réalisation en référence aux figures 5 à 6C. Pour cela, le module de blocage 113 peut présenter une pluralité de positions déployées autorisant l'insertion du tube 2 dans l'emmanchure 110 et une position de repos dans laquelle le module de blocage 113 est configuré pour maintenir en place tube 2 dans l'emmanchure 110. Dans la position de repos, le module de blocage 113 est plus particulièrement configuré pour empêcher un mouvement de coulissement du tube 2 de l'emmanchure 110 au moins dans le sens inverse à sa direction insertion. Le module de blocage 113 peut être configuré pour empêcher tout mouvement du tube 2 selon une direction parallèle à l'axe central A2 l'emmanchure lorsque le tube 2 est inséré dans l'emmanchure 110.

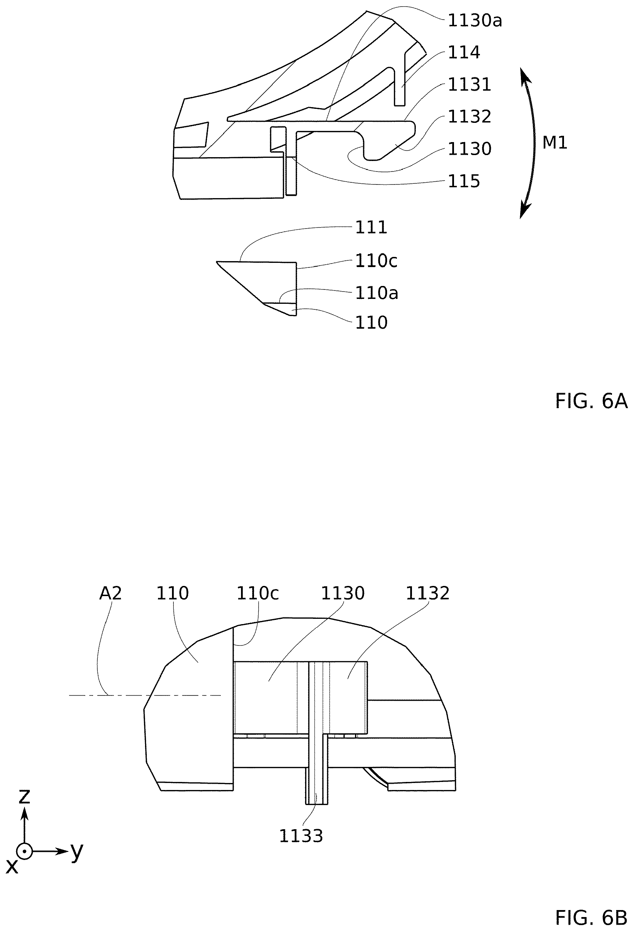

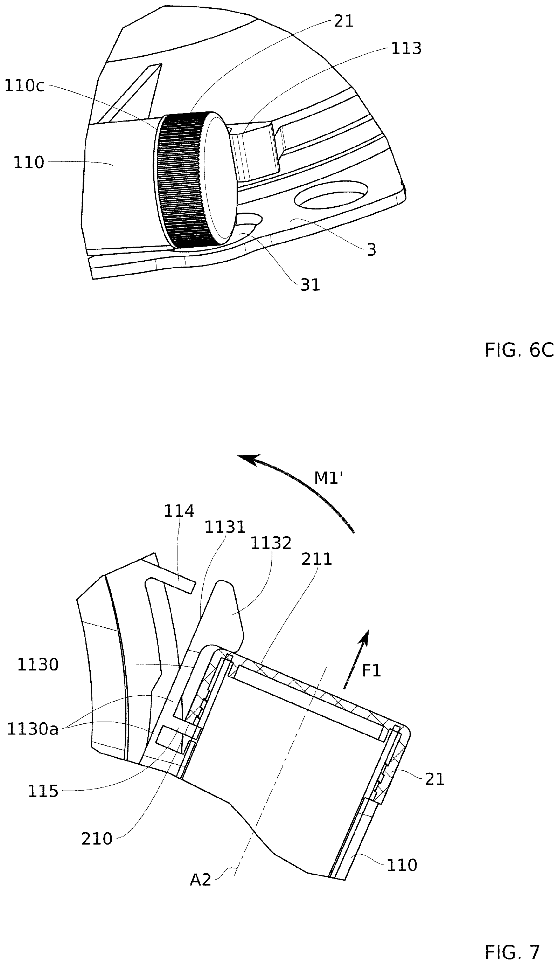

Le module de blocage 113 peut comprendre une mâchoire 1130 configurée pour enserrer le bouchon 21 du tube 2 lorsqu'il est inséré dans l'emmanchure 110, comme illustré en figure 6C. Dans la position de repos, et lorsque le tube est inséré dans l'emmanchure 110, la mâchoire 1130 peut plus particulièrement enserrer une surface inférieure 210 et une surface supérieure de 211 du bouchon 21.

Le passage entre les positions déployées et la position de repos du module de blocage 113 peut se dérouler de la façon suivante. Par défaut, sans exercice d'une force sur le module de blocage 113, le module de blocage 113 est dans sa position de repos, que le tube 2 soit inséré dans l'emmanchure 110 ou non.

Le passage entre les positions de repos et déployées du module de blocage 113 peut être fait par une déformation en flexion de ce module, illustrée par la double flèche M1 en figure 6A. Lors de l'insertion du tube 2 dans l'emmanchure 110, le tube 2 peut exercer une force sur le module de blocage 113 et induire sa déformation en flexion pour atteindre une position déployée. Le module de blocage 113 autorise alors le passage du tube 2. Lorsque le tube 2 arrive en fin de course dans l'emmanchure 110, le bouchon est placé au niveau de la mâchoire 1130 et n'exerce plus de force sur le module de blocage 113. Le module de blocage 113 peut automatiquement revenir à sa position de repos, de sorte que la mâchoire 1130 enserre le bouchon 21 du tube 2.

Lorsque l'on souhaite retirer le tube 2 du porte-tube 11, un utilisateur peut manuellement faire passer le module de blocage 113 de sa position de repos à une position déployée, autorisant ainsi le coulissement du tube 2 selon l'axe central A2 et la sortie du tube 2 par l'ouverture 110c de l'emmanchure 110.

Le module de blocage 113 peut s'étendre depuis l'emmanchure 110 selon une direction parallèle à l'axe central A2. Ainsi, le module de blocage 113 est plus facilement manipulable depuis l'extérieur du porte-tube 11. Ce module peut notamment être actionnable à une main par un utilisateur, par exemple pour un déblocage rapide du tube.

La mâchoire 1130 peut présenter un dos 1130a déformable en flexion et relié à une tête 1132 destinée à être mise en contact avec le tube 2 lors de son insertion, ou par un utilisateur pour induire le mouvement de flexion du module de blocage 113.

Le module de blocage 113 peut en outre présenter une surface arrière 1131 venant coopérer avec une butée 114 lorsque le module de blocage 113 est dans une position déployée maximale. La butée 114 permet de limiter le mouvement de flexion du module de blocage 113 et ainsi éviter une détérioration de ce module à l'usage.

Pour être déformable en flexion élastiquement, le module de blocage 113 peut être à base ou fait d'un matériau déformable élastiquement sous la contrainte exercée par le tube 2 ou exercée manuellement par un utilisateur. Ce matériau peut présenter les mêmes caractéristiques que celles décrites en référence à l'emmanchure 110, de préférence le module de blocage 113 est fait du même matériau que celui de l'emmanchure 110. Le module de blocage 113 et l'emmanchure 110 peuvent former un ensemble monobloc.

Le module de blocage 113 peut en outre comprendre une languette 1133 configurée pour s'insérer dans une ouverture 31 du deuxième support 3 lorsque que le support 10 est monté sur le deuxième support 3, le module de blocage 113 étant dans sa position de repos. La languette 1133 peut ainsi jouer le rôle d'un détrompeur. Dans le cas où le tube 2 n'est pas complètement inséré dans l'emmanchure 110, le module de blocage 113 n'est pas dans sa position de repos et la languette 1133 ne s'insère pas dans l'ouverture 31 du deuxième support 3. Il est alors impossible de monter le support 10 sur le deuxième support 3. Notons qu'il est possible de prévoir une ouverture complémentaire à la languette 1133 sur un autre élément que le deuxième support 3, par exemple directement sur le broyeur 4 lors ce que le support 10 est monté directement sur le broyeur 4. La languette 1133 s'étend plus particulièrement selon une direction z perpendiculaire à l'axe central A2. Le dispositif 1 peut en outre comprendre un module de déblocage 115 permettant de faciliter le retrait du tube 2 de l'emmanchement cône sur cône. Il est ainsi possible de s'affranchir d'un moyen de déblocage externe, par exemple d'un outil qu'un utilisateur utiliserait pour appliquer cette force sur l'emmanchure 110 ou le tube 2, par exemple en venant taper à la base du tube 2 pour le décoincer. Le module de déblocage 115 est configuré de façon à exercer une force supérieure à la force de maintien de la paroi interne 110a de l'emmanchure 110 sur la paroi externe 200 du tube 2, ou bien de façon à diminuer cette force de maintien.

Plusieurs exemples de réalisation de ce module de déblocage 115 sont maintenant décrits. Le module de déblocage 115 peut être configuré pour exercer une force sur l'emmanchure 110 de façon à la déformer élastiquement. Ainsi la section transversale de l'emmanchure 110 peut être augmentée de façon à diminuer, et de préférence supprimer, la force de contact entre la paroi interne 110a de l'emmanchure 110 et le tube 2. Par exemple, le module de blocage 115 peut être la languette 13 décrite précédemment relativement à l'organe d'indexage, et illustrée dans les figures 2A à 2C. Cette languette peut être disposée sur chacune des emmanchures 110. La languette 13 peut remplir à la fois le rôle d'organe d'indexage et de module de déblocage 115. Si aucun tube 2 n'est mis en place dans l'emmanchure 110, l'emmanchure peut ne pas être déformée. La languette 13 peut alors ne pas s'insérer dans l'encoche 32 du deuxième support 32. Le montage du support 10 sur le deuxième support 3 peut alors ne pas être possible.

Selon un autre exemple, le module de déblocage 115 peut être configuré pour exercer une force de poussée sur le bouchon 21 du tube 2 de façon induire un déplacement du tube selon une direction parallèle à l'axe central A2, comme l'illustre par exemple la flèche F1 en figure 7. Le module de déblocage 115 peut être au contact d'une surface inférieure 210 du bouchon 21 au niveau de la mâchoire 1130, lorsque le module de blocage 113 et dans sa position de repos. Ainsi, lorsque l'on souhaite retirer le tube 2 du porte-tube 11, le mouvement de flexion selon la flèche M1' du module de blocage 113 induit l'exercice d'une force par le module de déblocage 115, tendant à déplacer le tube 2 selon la flèche F1. Pour cela, le module de déblocage 115 peut être sous la forme d'une fourche ou d'une languette libre en flexion par rapport à l'emmanchure 110.

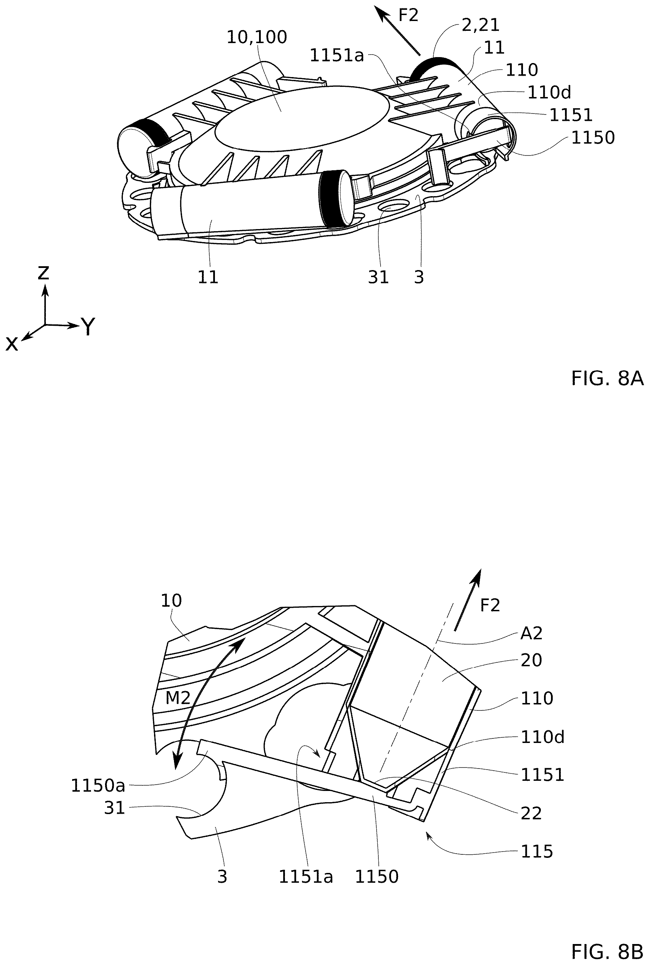

Selon un autre exemple, le module de déblocage 115 peut être configuré pour exercer une force de poussée sur la base 22 du tube 2, de façon induire un déplacement du tube 2 selon une direction parallèle à l'axe central A2, comme l'illustre par exemple la flèche F2 dans les figures 8A et 8B. Pour cela, le module de déblocage 115 peut comprendre un levier 1150 déformable élastiquement en flexion et présentant une position déployée lorsque le tube 2 est inséré dans l'emmanchure 110, dans laquelle la base 22 du tube 2 est en contact avec le levier 1150. Le levier 1150 peut présenter en outre une pluralité de positions rétractées dans lesquelles le levier 1150 exerce cette force de poussée sur la base 22 du tube 2. Le passage entre la position déployée et les positions rétractées du levier 1150 peut être illustré par la flèche M2 en figure 8B et être actionné manuellement par un utilisateur et/ou par le tube 2 lorsqu'il est inséré dans l'emmanchure 110.

Le module de déblocage 115 peut comprendre un corps 1151 creux disposé dans le prolongement de l'emmanchure 110 au niveau de l'ouverture 110d. Le corps 1151 peut être disposé de façon à entourer, de préférence entièrement, la base 22 du tube 2. Le levier 1150 peut être relié au corps 1151, par exemple à sa paroi interne. Le corps 1151 peut comprendre une encoche 1151a dans laquelle le levier 1150 peut s'insérer lorsqu'il est rétracté.

Le module de déblocage 115 peut en outre comprendre une tête 1150a configurée pour s'insérer dans une ouverture 31 du deuxième support 3 lorsque que le support 10 est monté sur le deuxième support 3, le module de déblocage 115 étant dans sa position déployée. La tête 1150a peut ainsi jouer le rôle d'un détrompeur. Dans le cas où le tube 2 n'est pas complètement inséré dans l'emmanchure 110, le module de déblocage 115 n'est pas dans sa position déployée et la tête 1150a ne s'insère pas dans l'ouverture 31 du deuxième support 3. Il est alors impossible de monter le support 10 sur le deuxième support 3. Notons qu'il est possible de prévoir une ouverture complémentaire à cette tête 1150a sur un autre élément que le deuxième support 3, par exemple directement sur le broyeur 4 lors ce que le support 10 est monté directement sur le broyeur 4. Pour être déformable en flexion élastiquement, le module de déblocage 115 peut être à base ou fait d'un matériau déformable élastiquement sous la contrainte exercée par le tube 2 ou exercée manuellement par un utilisateur. Ce matériau peut présenter les mêmes caractéristiques que celles décrites en référence à l'emmanchure 110, de préférence le module de déblocage 115 est fait du même matériau que celui de l'emmanchure 110. Le module de déblocage 115 et l'emmanchure 110 peuvent former un ensemble monobloc.

En addition aux caractéristiques précédemment décrites, un procédé d'utilisation du dispositif 1 est maintenant décrit selon un exemple de réalisation.

Le tube 2 peut être inséré dans l'emmanchure 110 du support 10 selon l'axe central A2 jusqu'à au moins une mise en contact de la paroi externe 200 du tube 2 de la paroi interne 110a de l'emmanchure 110 comme l'illustre le passage de la figure 2A à la figure 2B. Lors de l'insertion du tube 2, suite à sa mise en contact avec la paroi interne 110a, le tube 2 peut induire une déformation élastique de l'emmanchure 110, et notamment l'agrandissement de sa section transversale.

En outre, le tube 2 peut pousser le module de blocage 113 de sa position de repos à une position déployée selon les modalités décrites précédemment. Une fois le tube 2 inséré dans l'emmanchure 110, le module de blocage 113 peut automatiquement revenir dans sa position de repos et ainsi venir enserrer le bouchon 21 pour bloquer le mouvement de coulissement du tube 2.

Le support 10 peut ensuite être monté sur le deuxième support 3 comme l'illustre par exemple le passage de la figure 2B à la figure 2C. Notons qu'on peut prévoir le support 10 soit directement monté sur le broyeur 4. Lors de l'assemblage du support 10 sur le deuxième support 3, les organes d'indexage 13, 32 peuvent être assemblés de façon à empêcher la rotation relative de ces supports. L'ensemble formé par le premier support 10, les tubes 2 et le deuxième support 3 peut ensuite être monté sur le broyeur 4. De préférence, les tubes 200 insérés dans le support 10 avant son montage dans le broyeur 4 ou le cas échéant sur le deuxième support 3. Ainsi, le ou les éventuels modules de blocage 113 et modules de déblocage 115 pouvant faire office de détrompeur sont en position pour être insérés dans les ouvertures complémentaires du deuxième support 3 ou du broyeur 4. Notons qu'on peut prévoir en alternative que le premier support 10 soit monté sur le deuxième support 3 et/ou le broyeur 4 préalablement à l'insertion des tubes 2 dans les porte-tubes 11.

Suite au broyage, l'ensemble formé par le premier support 10, les tubes 2 et le deuxième support 3 peut être retiré du broyeur 4. Le premier support 10 et le deuxième support 3 peuvent être désolidarisés l'un de l'autre. Les tubes 2 peuvent ensuite être retirés des porte-tubes 11. Ici encore on peut prévoir que ces étapes soient faites dans un ordre différent. Lors du retrait des tubes 2, les modules de déblocage 115 peuvent être actionnés de façon à faciliter le retrait des tubes, selon les modalités précédemment décrites.

Au vu de la description qui précède, il apparaît clairement que l'invention propose un broyeur améliorant, et notamment facilitant, le maintien des tubes par le support.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention. Notamment, le dispositif peut présenter toute caractéristique permettant la mise en oeuvre d'une étape de procédé, et le procédé d'utilisation peut présenter toute étape résultant de la mise en oeuvre d'une caractéristique du dispositif.

Dans la description qui précède, le mouvement du support 10 décrit est un mouvement de précession. Notons qu'on peut prévoir que ce mouvement du support 10 soit une rotation soit sans changement d'orientation de l'axe principal A1.

## Revendications

1. Dispositif (1) pour broyeur (4) d'échantillons comprenant un premier support (10) apte à être monté sur le broyeur (4) et configuré pour être entrainé en rotation autour d'un axe principal (A1), le premier support (10) comprenant au moins un module dit porte-tube (11) configuré pour recevoir un tube (2) fermé par un bouchon (21) et contenant un échantillon, le porte-tube (11) comprenant une emmanchure (110) :
• s'étendant selon un axe central (A2) dans un plan sensiblement perpendiculaire à l'axe principal (A1) du premier support (10),
• destinée à recevoir le tube (2) par coulissement selon l'axe central (A2) de l'emmanchure (110), et
• présentant une paroi interne (110a) configurée pour coopérer par contact avec une paroi externe (200) du tube (2),
**caractérisé en ce que** la paroi interne (110a) de l'emmanchure (110) présente une forme conique.

2. Dispositif (1) selon la revendication précédente, dans lequel la paroi interne (110a) de l'emmanchure (110) est configurée pour entourer le tube (2) sur une partie seulement de sa circonférence, et est déformable élastiquement.

3. Dispositif (1) selon l'une quelconque des revendications précédentes, dans lequel, le dispositif (1) comprenant au moins un tube (2), l'emmanchure (110) présente, dans une section transversale prise perpendiculairement à l'axe central (A2) de l'emmanchure (110), un diamètre au repos (D1) inférieur au diamètre (D2) du tube (2) pris dans la même section transversale lorsque le tube (2) est inséré dans l'emmanchure (110).

4. Dispositif (1) selon l'une quelconque des revendications précédentes, dans lequel, le dispositif (1) comprenant au moins un tube (2), la paroi interne (110a) de l'emmanchure (110) définit un premier angle (θ₁), pris par rapport à une direction parallèle à l'axe central (A2) de l'emmanchure (110), inférieur ou égal à 2°, et la paroi externe (200) du tube (2) définit un deuxième angle (θ₂), pris par rapport à une direction parallèle à une direction d'extension principale (A4) du tube (2), égal au premier angle (θ₁).

5. Dispositif (1) selon l'une quelconque des revendications précédentes, dans lequel le porte-tube (11) comprend un module de blocage (113) comprenant une mâchoire (1130), le module de blocage (113) étant déformable élastiquement, entre au moins une position déployée autorisant l'insertion du tube (2) dans l'emmanchure (110) et une position de repos dans laquelle la mâchoire (1130) est destinée à enserrer le bouchon (21) du tube (2) lorsque le tube (2) est inséré dans l'emmanchure (110), de préférence le module de blocage (113) s'étend depuis l'emmanchure (110) dans une direction parallèle à l'axe central (A2) de l'emmanchure (110).

6. Dispositif (1) selon l'une quelconque des revendications précédentes, dans lequel le dispositif comprend en outre un deuxième support (3) comprenant au moins un module (31) apte à recevoir un tube contenant un échantillon, le premier support (10) étant apte à être monté de façon amovible sur le deuxième support (3), de préférence le premier support (10) et le deuxième support (3) comprennent chacun un organe d'indexage (13, 32) complémentaire configuré pour empêcher une rotation relative entre les premier (10) et deuxième (3) supports.

7. Dispositif (1) selon l'une quelconque des revendications précédentes, dans lequel le premier support (10) comprend en outre un module de déblocage (115) configuré pour exercer une force sur au moins l'un parmi l'emmanchure (110) et le tube (2) inséré dans l'emmanchure (110), de façon à dépasser et/ou relâcher une force de maintien de la paroi interne (110a) de l'emmanchure (110) sur le tube (2).

8. Dispositif (1) selon la revendication précédente, dans lequel le module de déblocage (115) est configuré pour exercer une force sur le tube (2) inséré dans l'emmanchure (110), de façon à induire un déplacement du tube (2) selon une direction parallèle à l'axe central (A2) de l'emmanchure (110), dans un sens contraire au sens d'insertion du tube (2) dans l'emmanchure (110).

9. Dispositif (1) selon l'une quelconque des deux revendications précédentes, dans lequel le module de déblocage (115) est configuré pour exercer une force sur l'emmanchure (110), de façon à déformer l'emmanchure (110) en agrandissant une section transversale de l'emmanchure (110), prise perpendiculairement à son axe central (A2).

10. Dispositif selon l'une quelconque des revendications précédentes, dans lequel le premier support (10) présente une surface inférieure (101), l'axe central (A2) de l'emmanchure (110) est perpendiculaire à une direction radiale (A3) du premier support (10), et l'axe central (A2) de l'emmanchure (110) est disposé :
• en projection selon un plan perpendiculaire à l'axe principal (A1) du premier support (10), à une distance d du centre (O) du premier support (10),
• en projection selon un plan perpendiculaire à l'axe central (A2) et incluant l'axe principal (A1) du premier support (10), à une hauteur h de la surface inférieure (101) du premier support (10),
• le rapport d/h étant compris entre 5 et 7,5.

11. Broyeur (4) comprenant le dispositif (1) selon l'une quelconque des revendications précédentes.

12. Procédé d'utilisation du dispositif (1) selon l'une quelconque des revendications 1 à 10, comprenant l'insertion d'un tube (2) fermé par un bouchon (21) et contenant un échantillon dans l'emmanchure (110) conique du porte-tube (11), par un mouvement de coulissement du tube (2) dans l'emmanchure (110) selon l'axe central (A2) de l'emmanchure (110), jusqu'à au moins une mise en contact de la paroi externe (200) du tube (2) et de la paroi interne (110a) de l'emmanchure (110).

13. Procédé selon la revendication précédente, dans lequel, la paroi interne (110a) de l'emmanchure (110) étant configurée pour entourer le tube (2) sur une partie seulement de sa circonférence, et étant déformable élastiquement, le mouvement de coulissement du tube (2) dans l'emmanchure (110) est effectué de façon à induire, suite à la mise en contact de la paroi externe (200) du tube (2) et de la paroi interne (110a) de l'emmanchure (110), une déformation élastique de l'emmanchure (110), de préférence le diamètre (D1) de l'emmanchure (110) augmente suite à la mise en contact de la paroi externe (200) du tube (2) et de la paroi interne (110a) de l'emmanchure (110), lors du mouvement de coulissement du tube (2) dans l'emmanchure (110).

14. Procédé selon l'une quelconque des deux revendications précédentes, dans lequel, le porte-tube (11) comprenant un module de blocage (113) comprenant une mâchoire (1130), le module de blocage (113) étant déformable élastiquement, entre au moins une position déployée autorisant l'insertion du tube (2) dans l'emmanchure (110) et une position de repos dans laquelle la mâchoire (1130) est destinée à enserrer le bouchon (21) du tube (2) lorsque le tube (2) est inséré dans l'emmanchure (110), lors du mouvement de coulissement du tube (2) dans l'emmanchure (110), le module de blocage (115) passe de la position déployée à la position de repos.

15. Procédé selon l'une quelconque des trois revendications précédentes, dans lequel, le dispositif (1) comprenant en outre un deuxième support (3) comprenant au moins un module (31) apte à recevoir un tube contenant un échantillon, le premier support (10) étant apte à être monté de façon amovible sur le deuxième support (3), le premier support (10) et le deuxième support (3) comprenant chacun un organe d'indexage (13, 32) complémentaire, le procédé comprend en outre le montage du premier support (10) sur le deuxième support (3), ledit montage comprenant un assemblage des organes d'indexage (13, 32) des premier (10) et deuxième (3) supports de façon à bloquer leur rotation relative.
